(19) Europäisches Patentamt
European Patent Office
Office européen des brevets

(11) **EP 3 377 956 B1**

(12) **EUROPÄISCHE PATENTSCHRIFT**

(45) Veröffentlichungstag und Bekanntmachung des Hinweises auf die Patenterteilung:
**01.04.2020 Patentblatt 2020/14**

(21) Anmeldenummer: **16766950.6**

(22) Anmeldetag: **16.09.2016**

(51) Int Cl.:
**G05G 5/03** (2008.04)      **G05G 1/02** (2006.01)

(86) Internationale Anmeldenummer:
**PCT/EP2016/071954**

(87) Internationale Veröffentlichungsnummer:
**WO 2017/084785 (26.05.2017 Gazette 2017/21)**

(54) **BEDIENVORRICHTUNG**

OPERATING DEVICE

DISPOSITIF DE COMMANDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.11.2015 DE 102015222714**

(43) Veröffentlichungstag der Anmeldung:
**26.09.2018 Patentblatt 2018/39**

(73) Patentinhaber: **Robert Bosch GmbH**
**70442 Stuttgart (DE)**

(72) Erfinder:
• **MEEMANN, Daniel**
  **31137 Hildesheim (DE)**
• **FREITAG, Thomas**
  **31191 Algermissen (DE)**
• **HERMANNS, Ingo**
  **31134 Hildesheim (DE)**

(56) Entgegenhaltungen:
**EP-A1- 3 018 563      DE-A1-102011 082 143**
**US-A1- 2011 205 038      US-A1- 2013 285 801**

EP 3 377 956 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung geht von einer Bedienvorrichtung nach der Gattung des unabhängigen Patentanspruchs aus.

Stand der Technik

Zunehmend finden zur Bedienung von elektronischen Geräten Bedieneinrichtung Verwendung, welche eine berührungsempfindliche Fläche, sei es ein sogenanntes Touch-Pad oder ein Touch-Screen bzw. Touch-Display aufweisen. Verbreitet sind Touch-Displays mit resistivem oder kapazitivem Wirkprinzip. Diese zeichnen sich dadurch aus, dass durch Berührung der berührungsempfindlichen Fläche mit einem Eingabeorgan, etwa einem Finger einer Bedienerhand oder einem Bedienstift ein elektrisches Signal ausgelöst werden kann. Weitere elektrische Signale können durch Überstreichen der berührungsempfindlichen Fläche oder Berühren und/oder Überstreichen an mehreren Stellen der berührungsempfindlichen Fläche erzeugt oder abgeleitet werden.

Um dem Benutzer eine Rückmeldung über die Berührung oder die damit ausgelöste Funktion des elektronischen Geräts zu vermitteln, kann beispielsweise ein sogenanntes haptisches Feedback vorgesehen werden. Dieses kann beispielsweise in Form einer auf Druck nachgebenden mechanischen Lagerung des berührungsempfindlichen Elements realisiert werden. Auch kann vorgesehen sein, dass das berührungsempfindliche Element mittels eines durch ein elektrisches Signal angesteuerten Aktors aus seiner Ruheposition ausgelenkt wird.

Die DE 10 2011 082 143 A1 offenbart eine Bedieneinrichtung mit einem Bedienelement mit haptischer Rückmeldung, wobei das Bedienelement von einer Bedienperson mittels eines Eingabeorgans betätigbar ist, mit einem ersten und einem zweiten flächigen Bauteil, die mit ihren großen Flächen parallel zueinander ausgerichtet und relativ zueinander bewegbar sind, wobei das erste flächige Bauteil das Bedienelement bildet oder seine Bewegung ganz oder teilweise auf das Bedienelement überträgt, welches sich dadurch auszeichnet, dass die flächigen Bauteile unter Beibehaltung ihrer Parallelität zueinander zwischen einer Ruheposition und einer Betätigungsposition geführt sind, wobei in der Betätigungsposition der Abstand zwischen den beiden flächigen Bauteilen geringer ist, als in der Ruheposition und die beiden flächigen Bauteile in ihre Ruheposition federbeaufschlagt sind. Neben der Hubbewegung führt das Bedienelement bei Betätigung eine Translation parallel zur großen Fläche aus, das heißt es ist Parallelogrammgeführt.

In der EP 3 018 563 A1 wird eine Aufhängungskomponente beschrieben, um ein Touchpanel an einem Substrat zu befestigen. Die Aufhängungskomponente beinhaltet ein flexibles Verbindungselement, welches zwischen dem Touchpanel und dem Substrat angebracht ist. Das Verbindungselement besteht aus einem konkaven Bereich, einer axialen Seitenwand und einer Bewegungslücke und erlaubt die Bewegung des Touchpanels in 3 oder mehr Freiheitsgraden im Vergleich zum Substrat.

Die US 2011/205038 A1 offenbart eine Vorrichtung zur Kontrolle haptischen Feedbacks mit einer Grundplatte, die das Feedback zum Finger des Benutzers überträgt, einem Oberflächen-Berührungssensor, um die Berührung mit einem Finger in dem Bereich zu detektieren und zwei Aktoren, welche mit der Grundplatte verbunden sind und darauf ein Drehmoment ausüben, um ein haptisches Feedback zu generieren.

Daneben ist auch eine Lagerung mit horizontaler Verschiebbarkeit der Oberfläche durch Lagerung auf Feder- oder Elastomerelementen bekannt.

Kern und Vorteile der Erfindung

Die Einführung vibrationsbasierter Techniken, um haptisches Feedback erzeugen erfordert die synchrone Bewegung größerer Oberflächen, zum Beispiel ganzer Bildschirme oder Touchpanels.

Für große Flächen, wie zum Beispiel Displays erfordert eine Parallelogrammführung recht große Bauhöhen, oder bei geringer Bauhöhe sehr stabile Bauteile, da hohe Kräfte auftreten. Eine stabile Bauweise bringt eine erhöhte Masse mit sich, was einen stärkeren motorischen Antrieb zur Aufrechterhaltung einer geforderten Vibrationsamplitude und/oder Vibrationsfrequenz erfordert oder aber die Vibrationsintensität und Bandbreite reduziert.

Bei schnellen Bewegungen, wie sie für die Erzeugung eines haptischen Feedbacks erforderlich sind, erscheint eine Parallelogrammführung weniger geeignet, da Taumelbewegungen auftreten, die zu einer Ungleichmäßigkeit der Bewegung führen können.

Gegenüber einer horizontal beweglichen Lagerung bietet die vorgeschlagene Lösung den Vorteil eines wesentlich stärkeren haptischen Erlebnisses, da die Fühlbarkeit von Bewegungen quer zur Achse des berührenden Fingers, also parallel zur Ebene des berührungsempfindlichen Oberfläche bei zumindest anteilig senkrecht dazu darauf einwirkenden Finger, deutlich geringer ist als achsenparallele Bewegungen, also senkrecht zur Oberfläche.

Die Messung der Betätigungskraft ist ein wesentliches Merkmal guter haptischer Lösungen. Eine solche Kraftmessung erfordert bei großen haptischen Flächen, wie beispielsweise Bildschirmen / Displays normalerweise mehrere Sensoren, was die Kosten erhöht. Im Falle eines im Markt verfügbaren Tablet-Computers wird dies beispielsweise mittels vier hinter der großen Oberfläche des Bedienelements angeordneten Dehnungsmessstreifen realisiert.

Bei der erfindungsgemäßen Lösung mit den Merkmalen des unabhängigen Patentanspruchs vollführt die Fläche des Bedienelements und damit deren zur Berührung vorgesehene große Oberfläche bei deren Auslenkung eine Art Schraubbewegung, also eine Translation senkrecht zur großen Oberfläche, nachfolgend auch Hub oder Hubbewegung, sowie eine Drehung parallel zur großen Oberfläche und damit um eine Achse senkrecht bzw. orthogonal zur großen Oberfläche bzw. parallel zur Richtung der Hubbewegung.

Dazu wird eine Bedieneinrichtung mit einem Bedienelement vorgeschlagen, wobei das Bedienelement als flächiges Bauelement mit mindestens einer großen Oberfläche ausgebildet ist, wobei das Bedienelement von einer Bedienperson mittels eines Eingabeorgans durch Berührung auf der großen Oberfläche betätigbar ist, mit einer Lagerung des Bedienelements, welche eine Hubbewegung des Bedienelements senkrecht zur großen Oberfläche ermöglicht, welches sich dadurch auszeichnet, dass die Lagerung dazu ausgebildet ist, das Bedienelement bei einer Hubbewegung zusätzlich in eine Rotation parallel zu seiner großen Oberfläche zu versetzen.

Erfindungsgemäß kann die Lagerung des Bedienelements Hebel umfassen, welche das Bedienelement mit Gegenlagern verbinden. Erfindungsgemäß sind die Hebel dabei als Kipphebel ausgeführt. Diese vorteilhaft eingliedrig ausgebildeten Hebel verbinden verschiedene Stellen der der zur Berührung vorgesehenen großen Oberfläche abgewandten rückseitigen Fläche des Bedienelements bzw. Touchpanels oder Touchdisplays mit der Umgebung. Länge und Einbauwinkel der Hebel legen das Verhältnis von Dreh- zu Linearbewegung fest.

Vorteilhaft sind die Kipphebel mittels Federkraft in ihre jeweiligen Ausgangslagen rückstellbar. Dazu können die Hebel vorteilhaft als in sich biegsame Federhebel ausgebildet sein.

Vorteilhaft sind die Hebel über erste Lager mit dem Bedienelement und über zweite Lager mit den Gegenlagern verbunden, wobei die Rotation durch die Ausrichtung der ersten und zweiten Lager vorgegeben ist. Vorteilhaft sind die Achsen sowohl der ersten als auch der zweiten Lager auf den Drehmittelpunkt ausgerichtet. Der Winkel zwischen Bedienelement und Hebel sowie der Abstand des Hebels vom Drehmittelpunkt bestimmen das Verhältnis von Rotation zu Hubbewegung. Ein spitzer Winkel resultiert in geringer Rotation und großem Hub, ein stumpfer Winkel in demgegenüber erhöhtem Rotationswinkel und geringerer Hubhöhe. Bei der Verwendung mehrerer Hebel, die unterschiedliche Abstände vom Drehpunkt haben können, ist der Winkel jeweils so zu wählen, dass sich für alle Hebel dasselbe Verhältnis von Hub zu Drehwinkel einstellt.

Abweichungen von dieser Auslegung führen zu Zwangskräften und Materialspannungen in der Hebelkonstruktion und innerhalb des Bedienelements bzw. des Gegenlagers. Die Materialspannungen insbesondere innerhalb der Hebel wirken als Rückstellkraft, welche bestrebt ist, den Hebel in seine jeweilige Ausgangslage zurückzustellen. Dieser Effekt kann vorteilhaft genutzt werden. Vorteilhaft sind dazu die Hebel aus einem elastischen Material, beispielsweise Federstahl gefertigt.

Die Erfindung macht sich die Umstände zu Nutze, dass nur geringe Hübe des Bedienelements in der Größenordnung von Zehntel Millimetern erforderlich sind und eine geringfügige Rotation um die zur großen Oberfläche des Bedienelements orthogonale Achse nicht störend sind.

Der Vorteil dieses Aufbaus liegt darin, dass alle Punkte des flächigen Bedienelements über Zug- und Schubkräfte synchronisiert werden, die im Vergleich zu Biege- und Torsionskräften sehr effektiv selbst über die dünne Bedienelement- bzw. Display- oder Panel-Fläche zu leiten sind.

Weiterhin hat die erfindungsgemäße Lösung den Vorteil, dass ein Antrieb des Bedienelements mittels eines Aktors, beispielsweise ein motorischer Antrieb in der horizontalen Ebene, also parallel zur großen Oberfläche des Bedienelements möglich ist, was die konstruktive Umsetzung erleichtert. Beispielsweise kann die Zahl der Antriebe von zwei - rechts/links - auf einen einzigen reduziert werden.

Ein weiches oder dünnes flächiges Bedienelement kann mit geringem konstruktivem Aufwand in synchrone Bewegung gesetzt werden. Somit ist der einfach Aufbau beispielsweise eines großflächigen Drucktasters mit nur einem einzigen, auch mechanischen, Schaltelement möglich.

Der einfache Aufbau erlaubt eine massearme Konstruktion, was bei schnellen oder hochfrequenten Bewegungen besonders vorteilhaft ist.

Auf diese Weise kann beispielsweise auf einfache Weise ein großflächiger, dünner Schallerzeuger bzw. Lautsprecher realisiert werden, bei dem das Bedienelement als die Schallwellen erzeugende Membran dient.

Die Oberfläche des Bedienelements kann einen ein weiten Grenzen wählbaren bzw. beliebigen Grundriss haben.

Bei der Verwendung eines optischen Touch-Sensors mit Umlenkspiegeln und mehreren optischen Sende- und Empfangselementen, kann sehr einfach über die Messung des Drehwinkels $\varphi$ des Bedienelements auf die Betätigungskraft geschlossen werden. Ein spezieller Kraftsensor, wie für Haptikfunktionen allgemein notwendig, kann somit eingespart werden.

Die synchrone Abwärts- oder auch die Drehbewegung des Bedienelements kann dazu verwendet werden, unmittelbar einen Schalter zu betätigen.

Die Messung einer Druckkraft auf die Oberfläche des Bedienelements bei dessen Bedienung kann mit nur einem Kraftsensor realisiert werden. Dazu kann zum Beispiel der Drehwinkel $\varphi$ oder die Höhe der Hubbewegung, hier der Absenkung des Bedienelements an einer beliebigen Stelle des Bedienelements gemessen werden.

Die auftretende Drehung $\varphi$ kann kompensiert werden, wenn zwei Führungssysteme der vorgeschlagenen Art hintereinander, also mechanisch in Serie geschaltet werden. Die Lagerhebel des zweiten Systems weisen dazu gegenüber den Hebeln des ersten Systems in die entgegengesetzte Richtung, sodass im zweiten System eine Drehung in die entgegengesetzte Richtung zu der des ersten Systems entsteht. Weisen beide Systeme die gleiche Steifigkeit und das gleiche Verhältnis von Drehwinkel zu Hub auf, so heben sich die Drehwinkel beider Systeme genau auf.

Zeichnungen

Ausführungsbeispiele der Erfindung sind in den Zeichnungen dargestellt und werden nachfolgend näher erläutert. Gleiche Bezugszeichen in den Zeichnungen bezeichnen dabei gleiche oder gleich wirkende Elemente.

Es zeigen:

Figur 1 ein Blockschaltbild eines möglichen Ausführungsbeispiels der erfindungsgemäßen Bedienvorrichtung

Figur 2 eine Prinzipdarstellung zur Verdeutlichung der Funktionsweise des mechanischen Teils der erfindungsgemäßen Bedienvorrichtung gemäß Figur 1,

Figur 3 einen Ausschnitt aus dem Blockschaltbild 1,

Figur 4 eine alternative Ausführungsform zu der der Figur 2 und

Figur 5 eine Auswerteanordnung zur Bestimmung einer Auslenkung des Bedienelements der erfindungsgemäßen Bedienvorrichtung

Figur 6 eine weitere Ausschnittsdarstellung zur Verdeutlichung der Geometrien der verwendeten Kipphebel in einer bevorzugten Ausführungsform der Erfindung.

Beschreibung der Ausführungsbeispiele

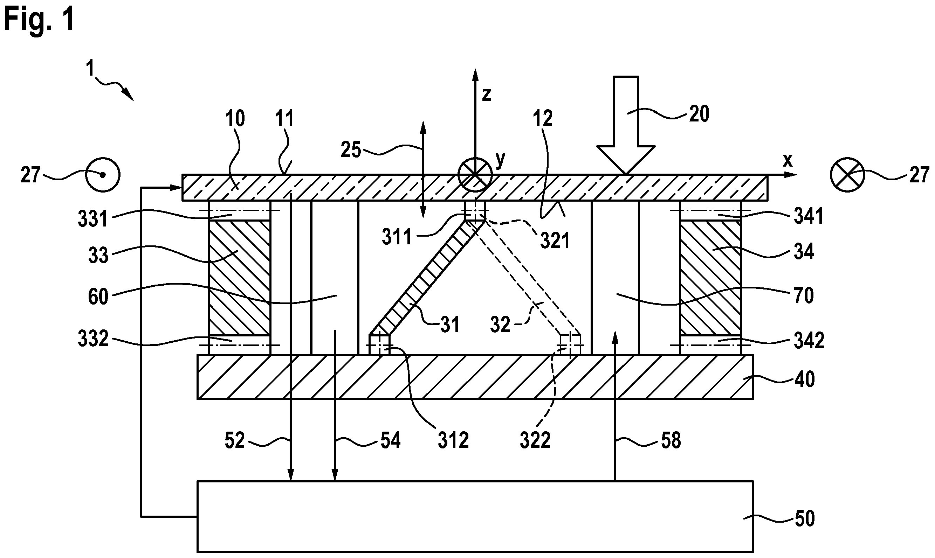

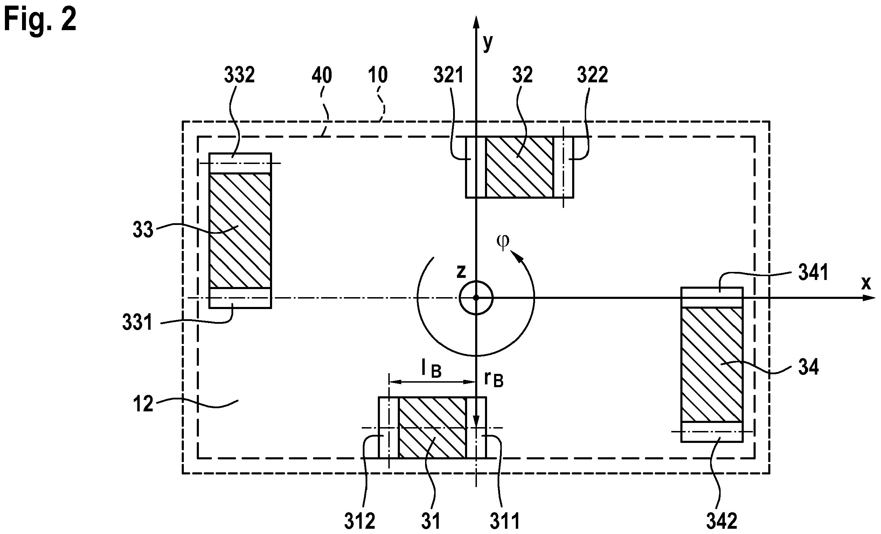

In Figur 1 wie auch Figur 2 ist ein kartesisches Koordinatensystem mit den Koordinaten x, y und z eingeführt. In Figur 1 weist die x-Koordinate nach rechts, die y-Koordinate in die Blattebene hinein und die z-Koordinate nach oben. In der Darstellung gemäß Figur 2 weist die x-Koordinate nach rechts, die y-Koordinate nach oben und die z-Koordinate aus der Blattebene heraus.

Figur 1 zeigt ein Blockschaltbild eines bevorzugten Ausführungsbeispiels der erfindungsgemäßen Bedienvorrichtung 1.

Die Bedienvorrichtung 1 umfasst ein flächiges Bedienelement 10 mit einer, wie aus Figur 2 ersichtlich, rechteckigen Oberfläche 11, welche auch als große Oberfläche 11 bezeichnet wird. Die große Oberfläche 11 liegt hier in der durch die x- und die y-Koordinate aufgespannten Fläche. Die der großen Oberfläche 11 des Bedienelements 10 abgewandte Fläche wird auch als Rückseite 12 bezeichnet.

Das Bedienelement 10 ist vorliegend als berührungsempfindliches Bedienelement, also als sogenanntes Touch-Panel, hier zusätzlich mit Anzeigefunktion, also als Touch-Display ausgeführt. Die zur Darstellung auf dem Display 10 vorgesehenen Informationen werden dem Display 10 von einer Steuerung 50 zugeführt.

Bei Berührung der großen Oberfläche 11 des Bedienelements, vorzugsweise mittels eines Eingabeorgans 20 eines Bedieners, also eines oder mehrerer Finger einer Bedienerhand oder etwas mittels eines Eingabestiftes erzeugt das Bedienelement ein elektrisches Bediensignal 52 oder eine elektrische Größe, welches oder welche von der Steuerung 50 erfasst wird. Dieses Bediensignal 52 oder diese elektrische Größe wird von der Steuerung 50 verarbeitet und in ein Steuersignal zur Auslösung von Funktionen eines elektronischen Geräts, das die erfindungsgemäße Bedienvorrichtung 1 umfasst, umgesetzt.

Wird durch das Eingabeorgan 20 ein Druck auf die große Oberfläche ausgeübt, kann dieser durch einen Sensor 60, beispielsweise einen Drucksensor, beispielsweise Piezo-Sensor oder Dehnmessstreifen, welcher an der Rückseite 12 des Bedienelements 10 angeordnet ist, erfasst und als ein Sensorsignal 54 der Steuerung 50 zugeführt werden. In Reaktion auf ein Bediensignal 52 und/oder ein Sensorsignal 54 kann die Steuerung ein Vibrationssignal 58 erzeugen, welches mittels eines mit der Rückseite 12 des Bedienelements 10 verbundenen Aktors 70, beispielsweise Piezo-Aktor, in eine schwingende Hubbewegung 25 parallel zur z-Achse, also senkrecht zur großen Oberfläche 11 des Bedienelements, und somit als Vibration des Bedienelements 10 umgesetzt wird.

Bei dem in den Figuren 1 und 2 dargestellten Ausführungsbeispiel ist das Bedienelement 10 über an seiner Rückseite 12 angeordnete Hebel 31, 32, 33 und 34 mit einer Grundplatte 40, etwa einer Leiterplatte des elektronischen Geräts verbunden. Die Hebel 31, 32, 33 und 34 sind vorliegend als Kipphebel oder Schwenkhebel ausgeführt. Der erste Kipphebel 31 ist an seinem oberen Ende über ein erstes Lager 311 mit der Rückseite des Bedienelements 10, an seinem unteren Ende über ein zweites Lager 312 mit einem ersten Gegenlager, welches hier durch die Grundplatte 40 gebildet wird, verbunden. Anlog ist der zweite Kipphebel 32 an seinem oberen Ende über ein drittes Lager 321 mit der Unterseite 12 des Bedienelements 10 sowie an seinem unteren Ende über ein viertes Lager 322 mit einem zweiten Gegenlager, beispielsweise der Grundplatte 40, der dritte Kipphebel 33 an seinem oberen Ende über ein fünftes Lager 331 mit der Unterseite 12 des Bedienelements 10 und an seinem unteren Ende über ein sechstes Lager 332 mit einem dritten Gegenlager, beispielsweise der Grundplatte 40, sowie der vierte Kipphebel 34 an seinem oberen Ende über ein siebentes Lager 341 mit der Unterseite 12 des Bedienelements 10 und an seinem unteren Ende über ein achtes Lager 342 mit einem vierten Gegenlager, beispielsweise der Grundplatte 40, verbunden.

Die Kipphebel 31, 32, 33 und 34 sind so bemessen und angeordnet, dass sie bei Auslenkung des Bedienelements 10 entgegen der der z-Achse, also senkrecht zur großen Oberfläche 11 des Bedienelements 10, also bei einer Hubbewegung 25 des Bedienelements 10 in negative z-Richtung, etwa infolge eines Drucks durch das Bedienorgan 20, das Bedienelement 10 auf eine Spiralbahn mit einer Drehung 27 entgegen dem Uhrzeigersinn führen. Die Bedienoberfläche 10 folgt damit einer Schraub- oder korkenzieherartigen Bewegung.

Dazu liegen die Achsen, um die erstes Lager 311, drittes Lager 321, fünftes Lager 331 und siebentes Lager 341 drehbar bzw. die Kipphebel 31, 32, 33 und 34 kipp- oder schwenkbar sind, auf Radialen ausgehend von der Achse, um die die Drehbewegung 27 des Bedienelements 10 bei dessen Hub 25 erfolgen soll. Im vorliegenden Fall fällt diese mit der z-Achse des in den Figuren dargestellten kartesischen Koordinatensystems zusammen. Die Drehachse des ersten Lagers 311 liegt in Figur 1 auf der y-Achse in deren negativem Wertebereich, die Drehachse des dritten Lagers 321 auf der y-Achse im deren positivem Wertebereich und die Drehachse des fünften Lagers 331 auf der x-Achse in deren negativem Wertebereich und die Drehachse des siebenten Lagers 341 auf der x-Achse ist deren positivem Wertebereich. Die Drehachse des zweiten, also des unteren Lagers 312 des ersten Kipphebels 31 liegt parallel zu der des ersten Lagers 311, jedoch gegenüber dieser in negativer z-Richtung und in negativer x-Richtung verschoben.

Somit ist der erste Kipphebel 31 in x-Richtung nicht senkrecht, sondern entlang der x-Achse verkippt, also in einem Winkel von ungleich 90°, beispielsweise von $\alpha = 60°$, unter der Rückseite 12 zu dieser angeordnet. Analog ist der zweite Kipphebel 32 in x-Richtung nicht senkrecht, sondern entgegen der x-Achse verkippt, also in einem Winkel von ungleich 90°, beispielsweise von $\alpha = 120°$, unter der Rückseite 12 zu dieser angeordnet. Bei Beaufschlagung des Bedienelements 10 mit einer Kraft in Richtung des Pfeils 20 kippt der erste Kipphebel 31 somit um das zweiten Lager 312 in Richtung 315, während der zweite Kipphebel 32 um das vierte Lager 322 in Richtung 316 kippt. Da zudem das erste obere Lager 311 und das zweite obere Lager in radialer Richtung den gleichen Abstand $r_B$ von der z-Achse aufweisen, zudem die Längen $l_B$ des ersten Kipphebels 31 und des zweiten Kipphebels 32 gleich sind, führt das Bedienelement 10 bei Beaufschlagung mit einer Druckkraft einerseits eine Hubbewegung in negativer z-Richtung aus, wird in der Figur also abgesenkt, zugleich wird es zu einer Drehbewegung um einen Winkel $\phi$ um die z-Achse gezwungen, führt also insgesamt eine schraubenförmige Bewegung aus.

Gleiches gilt analog auch für die weiteren Kipphebel, nämlich dritten Kipphebel 33 und vierten Kipphebel 34, welche zudem eine zusätzliche Abstützung des Bedienelements 10 bewirken und damit ein Kippen des Bedienelements um die y-Achse verhindern.

Die Anzahl und Anordnung der Hebel sind variierbar. Je mehr Hebel verwendet werden, desto geringer sind Die Anforderungen an die Biegesteifigkeit der Fläche. Dies ist insbesondere bei großen und dünnen Flächen, wie Displays, Touchpads, Touchpanels und dergleichen von Bedeutung.

Um ein Rückstellmoment entgegen der Pfeilrichtung 20 zu erzeugen, können die Hebel beispielsweise als Biegefedern ausgebildet sein, die vorzugsweise zumindest einseitig nicht frei drehbar, sondern beispielsweise in erstem 312, drittem 322, fünften 332 und siebentem Lager 343 fixiert sind.

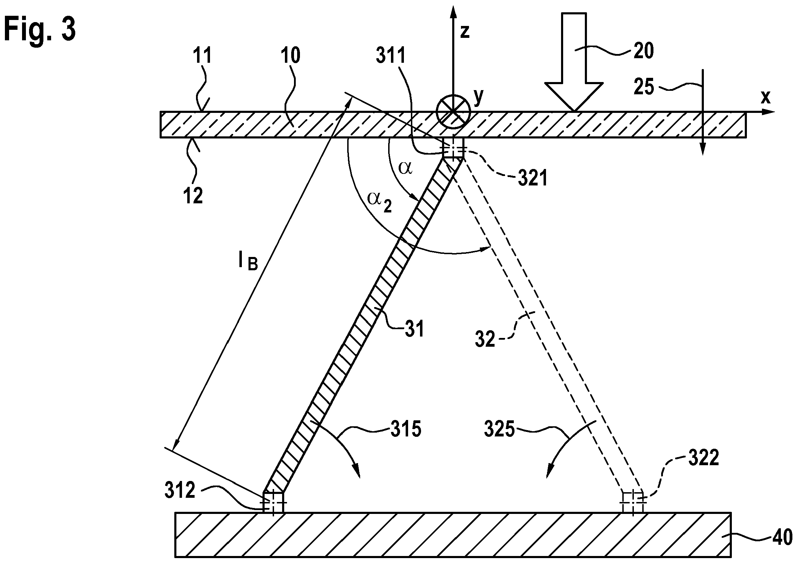

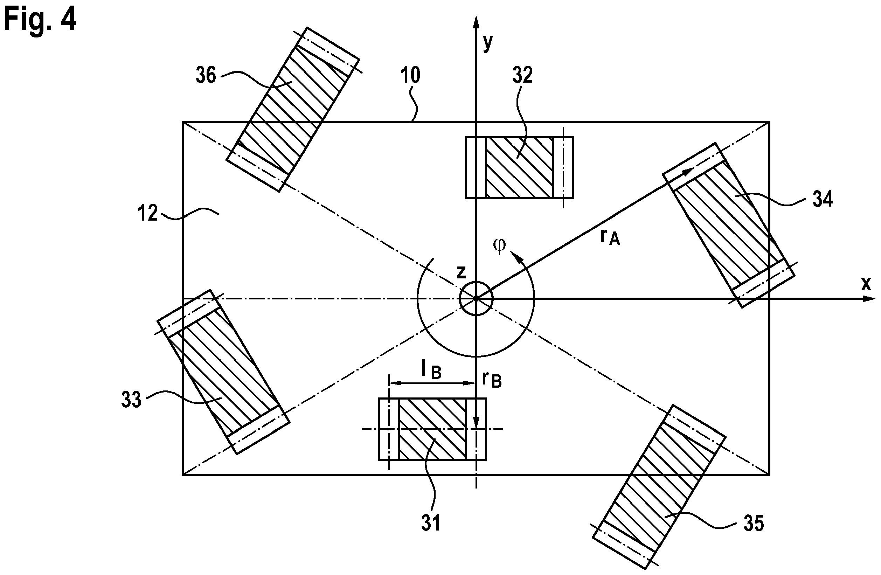

In dem in Figur 4 dargestellten Ausführungsbeispiel sind 6 Hebel vorgesehen. Davon sind vier Kipphebel 33, 34, 35 und 36 in oder nahe den Ecken der rechteckigen Oberfläche 12 des Bedienelements 10 angeordnet, wobei die oberen Lager dieser Kipphebel auf den Diagonalen der Oberfläche 12 und damit Radialen ausgehend von der Drehachse z liegen. Die Abstände der oberen Lager dieser Kipphebel sind jeweils um $r_A$ von der z-Achse beabstandet angeordnet und beschreiben somit einen Kreis um die z-Achse. Zwei weitere Kipphebel entsprechen dem ersten 31 und dem zweiten Kipphebel 32 der Figuren 1 bis 3. Die Abmessungen und der Einbauwinkel a(33, 34, 35, 36) ist für alle Hebel 33 bis 36 identisch, da der Radius $r_A$ um die Drehachse z für alle diese Kipphebel gleich ist. Da der erste Kipphebel 31 und der zweite Kipphebel 32 in einer davon abweichenden Entfernung $r_B$ von der Drehachse z angreifen, sind deren Längen $l_B$ von denen der Kipphebel 33, 34, 35 und 36 verschieden, wie auch in den Figuren dargestellt.

Die Berechnungsvorschrift für Länge und Einbauwinkel der Hebel 31, 32, 33, 34, 35 und 36 in Abhängigkeit von der Entfernung deren oberen Lager von der Drehachse z lauten in angenäherter Form

$$\text{Einbauwinkel } \alpha = \arctan(r_B \times \sin(\varphi)/z),$$

$$\text{Hebellänge } l_B = h/\sin(\alpha),$$

wobei mit z die Höhe des Hubes 25 bezeichnet ist und h den Abstand der Rückseite 12 des Bedienelements von der Grundplatte 40 bzw. den unteren Lagern 311, 321, 331, 341 der Kipphebel 31, 32, 33, 34 bezeichnet. Bei den Berechnungsvorschriften handelt es sich um Annäherungen, weil die Federn genaugenommen in der bevorzugten Ausführungsform leicht trapezförmig sind.

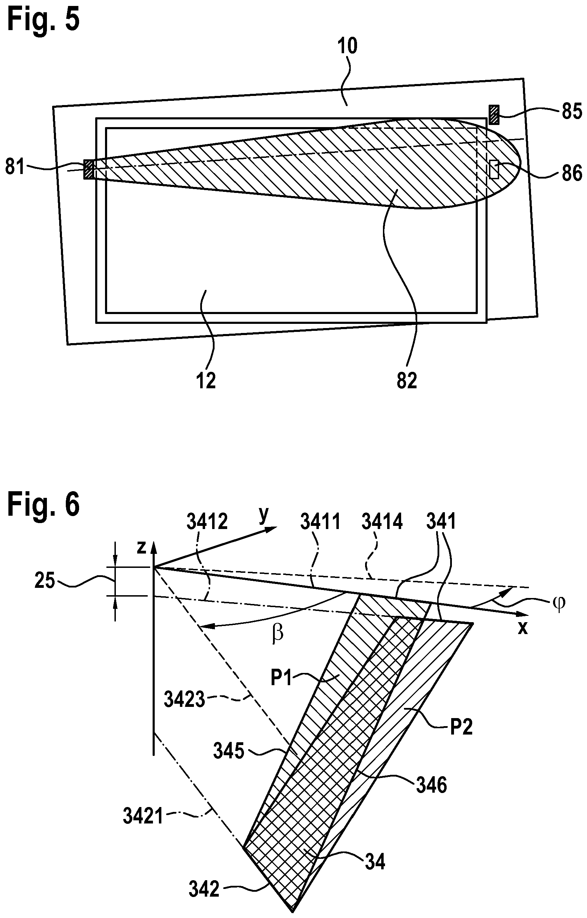

Dies ist in Figur 6 am Beispiel des vierten Kipphebels 34 gemäß Figur 2 dargestellt. Die Drehachse 3411 des oberen, siebenten Lagers 341 fällt hier mit der x-Achse zusammen und zeigt auf die Drehachse des Bedienelements 10, also die z-Achse. Da auch die Drehachse 3421 des unteren, achten Lagerns 342 auf die z-Achse ausgerichtet ist, liegen die Drehachsen 3411 des oberen Lagers 341 und 3421 des unteren Lagers 342 nicht parallel zueinander, sondern bilden zueinander einen Winkel. Dies ist aus der Projektion 3423 der Drehachse 3421 in die durch die x- und y-Koordinate aufgespannten, mit der großen Oberfläche 11 des Bedienelements 10 aufgespannten Ebene ersichtlich, wo die Projektion 3423 der Drehachse 3421 des unteren Lagers 342 zur Drehachse 3411 des oberen Lagers 342 in einem Winkel β steht. Demnach sind die Drehachsen des oberen und des unteren Lagers nicht exakt parallel zueinander angeordnet, da obere und untere Achse auf den Mittelpunkt, also die z-Achse weisen. Die Außenkante 346 des Kipphebels 34 Hebels ist damit außen, also an seiner der z-Achse abgewandten Kante größer die seiner der Drehachse z zugewandten Innenkante 345 innen, weiterhin ist der Einbauwinkel an der der z-Achse zugewandten Seite des Hebels leicht stumpfer als an der z-Achse abgewandten Außenseite 346 des Hebels 34. Dies bedeutet, dass der Kipphebel 34 schon in der Ausgangslage P1 leicht tordoiert, also entlang seiner Längsachse leicht in sich gedreht ist. Bei Druck auf das Bedienelements 20 folgt das Bedienelement 10 und damit seine große Oberfläche 11 infolge der Anordnung der Kipphebel 31, 32, 33 und 34, in Figur 6 des Kipphebels 34, einer schraubenförmigen Bahn, senkt sich also um den Hub 25 und dreht sich entgegen Uhrzeigersinn um den Drehwinkel φ zwischen der Drehachse 3411 des oberen Lagers 341 in der Ausgangslage und der Projektion 3414 der um den Hub 25 abgesenkten Drehachse 3412 des oberen Lagers 341 in der ausgelenkten Position P2.

In Figur 5 ist eine Auswerteanordnung zur Bestimmung der und eines Maßes der Auslenkung 25, 27 des Bedienelements 10 infolge einer darauf einwirkenden Betätigungskraft 20 skizziert.

Dargestellt ist der druckbelastete Zustand, in dem das Bedienelement 10 in Form einer Schraubbewegung, also einer kombinierten Hub- und Drehbewegung ausgelenkt ist.

Bei Druck auf die Oberfläche 11, beispielsweise Touchfläche, wird diese gegenüber einem Gehäuse 41, an dem eine Lichtquelle 81, beispielsweise Leuchtdiode, angeordnet ist, verdreht (27) Da das Bedienelement 10 die gleichzeitig Lichtleiterfunktion besitzt, ändert sich die Richtung des von der Lichtquelle 81 emittierten Lichtstrahles 82 entsprechend. Diese Veränderung ist durch voneinander beabstandet angeordnete lichtempfindliche Elemente 85 und 86 feststellbar. Dazu sind diese lichtempfindlichen Elemente derart angeordnet, dass sie zueinander einen Abstand aufweisen und zudem das Bedienelement 10 als Lichtleiter zwischen Lichtquelle 81 und den lichtempfindlichen Elementen 85 und 86 fungiert. Die Differenz der Beleuchtungsstärke dieser mindestens zweier benachbarter Lichtsensoren 85 und 86 entspricht dem Maß der Auslenkung des Bedienelements 10 und ist damit ein Maß für die aufgebrachte Druckkraft 20. Die Auswertung kann vorzugsweise in der Steuerung 50 erfolgen, welche in Abhängigkeit der festgestellten Auslenkung bzw. Druckkraft ein Steuersignal oder eine Steuerfunktion erzeugt.

**Patentansprüche**

1. Bedieneinrichtung (1) mit einem Bedienelement (10),
   wobei das Bedienelement (10) als flächiges Bauelement mit mindestens einer großen Oberfläche (11) ausgebildet ist,
   wobei das Bedienelement (10) von einer Bedienperson mittels eines Eingabeorgans (20) betätigbar ist,
   mit einer Lagerung (31, 32, 33, 34, 35, 36) des Bedienelements (10), welche eine Hubbewegung (25) des Bedienelements (10) senkrecht zur großen Oberfläche (11) ermöglicht,
   **dadurch gekennzeichnet,**
   **dass** die Lagerung (31, 32, 33, 34, 35, 36) dazu ausgebildet ist, das Bedienelement (10) bei einer Hubbewegung (25) zusätzlich in eine Rotation (27) parallel zu seiner großen Oberfläche (11) zu versetzen und dass die Lagerung des Bedienelements (10) Hebel (31, 32, 33, 34, 35, 36) umfasst, welche das Bedienelement (10) mit Gegenlagern (40) verbinden, wobei die Hebel (31, 32, 33, 34, 35, 36) als Kipphebel ausgeführt sind und sich für alle Hebel (31, 32, 34, 35, 36) dasselbe Verhältnis von Hub zu Drehwinkel einstellt.

2. Bedieneinrichtung (1) nach Anspruch 1, **dadurch gekennzeichnet, dass** die Kipphebel (31, 32, 33, 34, 35, 36) mittels Federkraft in Ausgangslagen rückstellbar sind.

3. Bedieneinrichtung (1) nach einem der Ansprüche 1 bis 2, **dadurch gekennzeichnet, dass** die Hebel (31, 32, 33, 34, 35, 36) als in sich biegsame Federhebel ausgebildet sind.

4. Bedienelement (1) nach einem der Ansprüche 1 bis 3, **dadurch gekennzeichnet, dass** die Hebel (31, 32, 33, 34, 35, 36) über erste Lager (311, 321, 331, 341) mit dem Bedienelement (10) und über zweite Lager (312, 322, 332, 342) mit den Gegenlagern (40) verbunden sind, und dass die Rotation (27) durch die Dimensionierung der Hebel (31, 32, 33, 34, 35, 36) und deren Anordnung zueinander vorgegeben ist.

**Claims**

1. Operating device (1) comprising an operating element (10),

wherein the operating element (10) is designed as a flat component having at least one large surface (11),

wherein the operating element (10) can be actuated by an operator by means of an input unit (20),

further comprising a bearing (31, 32, 33, 34, 35, 36) of the operating element (10), which permits a lifting movement (25) of the operating element (10) perpendicular to the large surface (11),

**characterized in that**

the bearing (31, 32, 33, 34, 35, 36) is designed to additionally make the operating element (10) rotate (27) parallel to its large surface (11) during a lifting movement (25), and **in that** the bearing of the operating element (10) comprises levers (31, 32, 33, 34, 35, 36), which connect the operating element (10) to counter bearings (40), wherein the levers (31, 32, 33, 34, 35, 36) are designed as rocker arms and the same ratio of lift to rotational angle is established for all levers (31, 32, 33, 34, 35, 36).

2. Operating device (1) according to Claim 1, **characterized in that** the rocker arms (31, 32, 33, 34, 35, 36) can be reset into initial positions by means of spring force.

3. Operating device (1) according to either of Claims 1 and 2, **characterized in that** the levers (31, 32, 33, 34, 35, 36) are designed as intrinsically flexible spring levers.

4. Operating element (1) according to one of Claims 1 to 3, **characterized in that** the levers (31, 32, 33, 34, 35, 36) are connected via first bearings (311, 321, 331, 341) to the operating element (10) and via second bearings (312, 322, 332, 342) to the counter bearings (40), and **in that** the rotation (27) is predefined by the dimensioning of the levers (31, 32, 33, 34, 35, 36) and their arrangement relative to one another.

**Revendications**

1. Dispositif de commande (1) comprenant un élément de commande (10), l'élément de commande (10) étant réalisé sous forme d'élément structurel plat avec au moins une grande surface (11), l'élément de commande (10) pouvant être actionné par un opérateur au moyen d'un organe d'entrée (20), comprenant un support sur palier (31, 32, 33, 34, 35, 36) de l'élément de commande (10) qui permet un déplacement de course (25) de l'élément de commande (10) perpendiculairement à la grande surface (11),

**caractérisé en ce que**

le support sur palier (31, 32, 33, 34, 35, 36) est réalisé en outre de manière à mettre l'élément de commande (10) en rotation (27) parallèlement à sa grande surface (11) lors d'un déplacement de course (25) et **en ce que** le support sur palier de l'élément de commande (10) comprend des leviers (31, 32, 33, 34, 35, 36) qui relient l'élément de commande (10) à des contre-paliers (40), les leviers (31, 32, 33, 34, 35, 36) étant réalisés sous forme de leviers basculants et le même rapport entre la course et l'angle de rotation s'établissant pour tous les leviers (31, 32, 33, 34, 35, 36).

2. Dispositif de commande (1) selon la revendication 1, **caractérisé en ce que** les leviers basculants (31, 32, 33, 34, 35, 36) peuvent être ramenés dans des positions de départ au moyen d'une force de ressort.

3. Dispositif de commande (1) selon l'une quelconque des revendications 1 à 2, **caractérisé en ce que** les leviers (31, 32, 33, 34, 35, 36) sont réalisés sous forme de leviers à ressorts flexibles en soi.

4. Élément de commande (1) selon l'une quelconque des revendications 1 à 3, **caractérisé en ce que** les leviers (31, 32, 33, 34, 35, 36) sont connectés par le biais de premiers paliers (311, 321, 331, 341) à l'élément de commande (10) et par le biais de deuxièmes paliers (312, 322, 332, 342) à des contre-paliers (40), et **en ce que** la rotation (27) est prédéfinie par le dimensionnement des leviers (31, 32, 33, 34, 35, 36) et leur agencement les uns par rapport aux autres.

**Fig. 1**

EP 3 377 956 B1

**Fig. 2**

Fig. 3

Fig. 4

# Fig. 5

# Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011082143 A1
- EP 3018563 A1

- US 2011205038 A1